# EUROPEAN PATENT SPECIFICATION

(11) **EP 1 021 104 B1**
(45) Date of publication and mention of the grant of the patent: **26.03.2003**
(21) Application number: 98900093.0
(22) Date of filing: 02.01.1998
(51) Int. Cl.: A44B 13/00

(54) **FLEXIBLE ATTACHMENT MEANS**
FLEXIBLE BEFESTIGUNGSNITTEL
DISPOSITIF D'ATTACHE FLEXIBLE

(30) Priority: 04.01.1997 GB 9700099
(43) Date of publication of application: 26.07.2000
(73) Proprietor: Glasby, David, Lincoln LN2 4SB (GB)
(72) Inventor: GLASBY, David, Lincoln LN2 4SB (GB)
(74) Representative: Middlemist, Ian Alastair
(86) International application number: GB9800004
(87) International publication number: WO98029002

(56) References cited:
- WO-A-92/08600
- DE-A- 2 248 678
- FR-A- 728 931
- FR-A- 2 655 952
- GB-A- 2 079 215
- US-A- 2 601 853
- US-A- 3 885 327
- US-A- 3 920 180
- US-A- 4 662 770
- US-A- 5 590 972
- PATENT ABSTRACTS OF JAPAN vol. 009, no. 063 (M-365), 20 March 1985 -& JP 59 196214 A (MIYAKO FURUKAWA), 7 November 1984,

## Description

### Field of the Invention

This invention relates to a flexible attachment means attaching load bearing members to sheets or like material.

### Background of the Invention

There is a need for a means of securing, fixing or attaching loads to flexible surfaces or sheets which do not themselves have the inherent strength to withstand the initial shock, or accumulated stress of a point fixture of a load bearing member. At present, it is the practice to fold, layer, twist together, or gather in a bunch a substantial extent of the sheet, and to tie e.g. a cord about the thus formed mass, or to twist or bind the formed mass in coiled metal or plastic which grips or tightens onto the mass. Alternative methods include the use of sewn, welded etc. reinforcements, and eyelets.

Bunching the sheet into a mass distorts the sheet and reinforcements or eyelets break away from the sheet due to changes in composition, deterioration or fatigue arising from shock, stress and exposure to weathering and/or chemical attack.

Strips of a uniform tape may be used as a reinforcement of a part of a sheet, but do not allow for fixing of or penetration by a weight-carrying member without severe distress, distortion and tearing at the point of attachment. The use of an eyelet is limited by the correct pressure on the edge of the sheet at the point of fixing, and by the ability of the material to withstand piercing, compression and tearing stresses arising about the circumference of the perforation.

Examples of connectors are described in e.g. FR-A-728,931, GB-A-2,079,215, US-A-2,601,853; WO 92/08600 and DE-A-2,248,678. The French document describes a reinforcement for paper register sheets including a perorated steel strip, separated from the paper sheet by a glued cloth edge band, to reinforce the perforated edge of the paper where it is bound into the register. In the British specification, a tarpaulin has its edge reinforced by a strip of similar material, and a cord extends parallel to the edge, between the sheet and strip. Holes for connectors are formed by cutouts, with flaps which are folded over the cord. In the U.S. Patent, perforated sheets of paper are reinforced in the zone surrounding the perforations by off-centre reinforcing rings, provided with a further reinforcement piece between the ring and the paper. In the German specification, a T-sectioned member has its head sandwiched between a plastics web and a heat welded plate, with the web extending through the plate.

WO 92/08600 proposes the attachment of a connector to a thermoformed substrate such as a carpet or the like, wherein the connector has raised boss side flanges, by adhering the flanges to the substrate, by means of a thermoplastic tape, which is bonded as part of a thermoforming step in making the substrate. Fasteners are engaged through an aperture in the raised boss, which Is exposed between or above the thermoplastic tape. This therefore shows an attachment means comprising a load bearing member, a sheet, tape material and a reinforcing member.

GB-A-2079215 discloses an edge of a coversheet wherein a cord extends adjacent to the edge, and is held between the sheet and a strip of material along the edge. A series of spaced holes is provided which provide flaps over the cord and allow fastenings to be secured through the holes. This also constitutes an attachment means comprising a load bearing member, tape material and a reinforcing member.

The connections afforded by these examples of prior art reinforcements are restricted to use adjacent the edges of a sheet, or are effected at the time of manufacture of the sheet or substrate.

It is thus an object of the invention to provide a connector, which can be located on a sheet or tarpaulin for example at any time, such as immediately prior to use, and at any location on the sheet.

### Summary of the Invention

It is an object of this invention to provide a means attaching a load bearing member to a sheet, so that the stresses arising from the load on the sheet are distributed in such a way that the strength of the sheet is not exceeded in the area of the point of attachment.

According to the invention, attachment means attaching a load bearing member to a sheet comprises a sheetlike piece of adhesive coated tape material having an extensive surface area and a reinforcing member, the reinforcing member being attached to the sheet and lying between the sheet and the adhesive coated tape material extending beyond the reinforcing member on at least two sides, characterised in that the load bearing member comprises a cord which is passed through aligned apertures in said sheet, reinforcing member and adhesive tape material, and has a part or attachment of greater size than the apertures on the end of the cord which extends through the apertures.

The tape material may be coated with adhesive on the surface of the tape material intended to contact the host surface. The piece may be supplied with the adhesive protected by a removable sheet of silicone or other release material.

The reinforcing member may comprise a flat body, of any requisite shape, of a relatively strong and rigid material, and is preferably thicker than the material of the piece.

The reinforcing member is preferably adhered to the tape material of the piece, and the attachment means may be manufactured and supplied as a continuous strip, having the reinforcing member extending longitudinally of the strip, with the tape being. wider than the reinforcing member and extending to each side of the reinforcing member. In this embodiment, sections of requisite length may be cut off from the strip as required.

The host sheet may be a relatively thin sheet, such as a plastics film, or canvas for example.

One or more apertures for passing of a part of a load bearing member are provided through the reinforcing member and the tape, and the host sheet. The load bearing member being the end of a cord or other line, is passed through the host sheet, reinforcing member, and tape and be secured by a knot, or body secured to the cord end, which is too large to pass through the aperture.

The load bearing member may have a flexible mushroom head or other expansible part, which can be pushed through the apertures in the reinforcing member and tape and/or host sheet or may be secured with a knot.

The attachment means may be supplied ready perforated for the envisaged use, or may be perforated on site using a suitable punch or other perforating tool.

### Description of the Drawings

A number of embodiments of the invention will now be described by way of example, with reference to the accompanying drawings, wherein: -
- **Fig. 1**: is a perspective view of an attachment patch according to the invention;
- **Fig. 1a**: is a sectional view of the patch;
- **Fig. 2**: is a sectional view of modified embodiment of patch according to the invention in place on a sheet of host material and in conjunction with the use of a load bearing member; and
- **Fig. 3**: is a perspective view of the Fig. 2 embodiment.

### Description of Preferred Embodiments

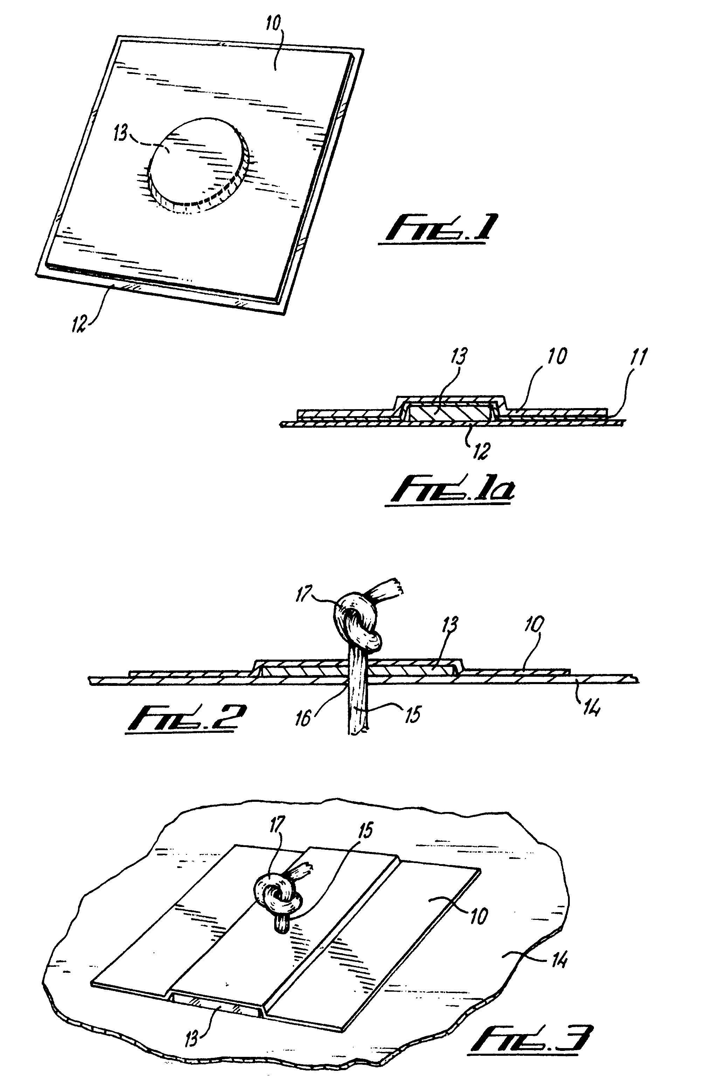

The attachment means according to the invention are generally speaking in the form of patches, which are adhered to a host material so as to ensure an extensive area of contact and adhesion between the patch and the host material. Figs. 1 and 1a show a basic simple form of patch, as supplied prior to application to a host material, and this comprises a pliable tape layer 10, with an adhesive coating 11, which is protected by a release sheet 12. A disc or wafer 13 of a reinforcement material is sandwiched between the tape layer 10 and the release sheet 12.

For use, the release sheet 12 is peeled from the adhesive 11, and the patch is applied to a host material, sandwiching the reinforcement wafer 13 between the tape layer 10 and the host material. The wafer, and also the host material and the tape layer 12 perforated after attachment of the patch e.g. by a punch, for reception of a load bearing member, as will be further described below.

Figs. 2 and 3 illustrate a modified embodiment of attachment patch, wherein the reinforcement wafer 13 is an elongate rectangular member extending from one edge to another of the patch. This patch may be provided as an elongate strip, from which pieces are cut to the required length. The patch is adhered onto a sheet of host material 14, and a retaining weight bearing element 15, in the form of a plastics strand, is passed through a hole 16 provided for example by punching through the host material 14, reinforcement 13, and tape layer 10. The element 15 is retained in the hole 16 by means of a knot 17 provided in the projecting end of the element 15 after being passed through the hole 16.

The load bearing member cords, 15 in Figs. 2 and 3 may comprise or be attached to securement members such as ropes, guys, stays and cables, hooks, etc.. The range of possible uses includes the reinforcement or fixing of signs, banners, flags, boat covers, tarpaulin sheets, plastics sheeting of all kinds, tents, pond liners, aprons, sterile clothing and chemical, etc. hazard protection clothing, balloons, backdrops, screens, kites, mattress covers, packaging, casualty stretchers, flooring and roofing membranes. Excellent reinforcement can, using the apparatus of the invention, be applied anywhere on a host surface. The reinforcement can be applied at any stage of manufacture or in use or during repair, and can replace more expensive eyelets, doubled edges, stitched edges, or fabric reinforcements.

The use of the reinforcement allows cheaper film sheets to be used in place of coated textiles, and to be used in a range of emergency or temporary applications, such as for shelters, food stores, water carriers, slings and stretchers for example, and enables in some embodiments, a fixture for waterproof or sterile sheets without puncture or penetration of the host surface.

Various tests have been carried out to measure the puncture resistance of sheets provided with attachment patches according to the invention, for example, field testing, e.g. by fixing sheets in an outdoor environment for extended periods, and hanging weights from the load bearing members, by reinforced eyelets. Also tests have been made with a tensile testing machine, by clamping the host sheet patch combination in a lower face, and a cable or cable tie load bearing member in a top jaw and separating the jaws at a rate of 300mm per minute, and the failure loading recorded. In all cases, it was the host material, which failed. Using 100 micron thickness polyethylene film and a 25mm reinforcing patch or strip with a 10mm hole, the following average failure loads were achieved:

| | Unreinforced | Reinforced |
|---|---|---|
| Patch (Fig. 3) | 30N | 150N |

All test, quantative and field, showed considerable improvements in the holding strength of the fixing using the reinforcement.

Examples of materials which can be used include, but are not limited to, for the tape layer 10, etc.: - woven or nonwoven cloth or canvas; PVC, polyethylene, polypropylene or polyester foil, coated woven or nonwoven cloth or canvas, with acetate, cellulose, PTFE, or polyurethane coating, etc. Preferably, a waterproofed cloth, e.g. canvas, is used for best tear resistance.

The adhesive may be pressure-sensitive, hot-melt or solvent-activated adhesives based on, for example, an acrylic, silicone, natural rubber, phenolic, epoxy, or synthetic rubber.

The reinforcement 13 may comprise a foil, of nylon, PVC, PTFE, polyester, polyurethane, polypropylene, polyurethane, acrylic, polystyrene, polycarbonate, ABS or the like.

The combined thickness of the tape layer 10 and reinforcement 13 may be in the range of 0.5-1.5mm.

## Claims

1. Attachment means attaching a load bearing member 15 to a sheet 14 comprising a sheetlike piece of adhesive coated tape material 10 having an extensive surface area and a reinforcing member 13, the reinforcing member 13 being attached to the sheet 14 and lying between the sheet 14 and the adhesive coated tape material 10, the adhesive tape material 10 extending beyond reinforcing member 13 on at least two sides **characterised in that** the load bearing member 15 comprises a cord which passes through aligned apertures 16 in said sheet 14, reinforcing member 13 and adhesive tape material 10, and has a part or attachment 17 of greater size than the apertures 16 on the end of the cord which extends through the apertures.

2. Attachment means according to claim 1 wherein the tape (10) is coated with an adhesive (11) on the surface of the tape material contacting the sheet (14).

3. Attachment means according to claim 2 wherein the tape (10) is supplied for use with the adhesive (11) protected by a removable sheet (12) of releasable material.

4. Attachment means according to any preceeding claim wherein the reinforcing member (13) comprises a flat body of a relatively strong and rigid material, which is thicker than the tape material (10).

5. Attachment means according to any of claims 1 to 3 wherein the reinforcing member (13) is equal to or thinner than the tape material (10).

6. Attachment means according to claim 1 wherein the tape material 10 and reinforcing member 13 manufactured and supplied adhered together as a continuous strip having the reinforcing member (13) extending longitudinally of the strip, the tape 10 being wider than the reinforcing member (13) and extending to each side thereof for later provision of apertures 16 and the cord 15 for assembly with sheet 14.

7. Attachment means according to claim 1 wherein said part 17 comprise a knot or mushroom head.

## Patentansprüche

1. Befestigungsvorrichtung zum Befestigen eines Last aufnehmenden Gliedes (15) an einem Flachmaterial (14), die ein flachteilartiges Stück eines mit Klebemittel beschichteten Bandmaterials (10) mit einer ausgedehnten Oberfläche und ein Verstärkungsglied (13) umfaßt, wobei das Verstärkungsglied (13) an dem Flachmaterial (14) angebracht ist und zwischen dem Flachmaterial (14) und dem mit Klebemittel beschichteten Bandmaterial (10) liegt, wobei sich das haftende Bandmaterial (10) auf mindestens zwei Seiten über das Verstärkungsglied (13) hinauserstreckt,
**dadurch gekennzeichnet, daß** das Last aufnehmende Glied (15) eine Schnur umfaßt, die durch fluchtende Öffnungen (16) in dem Flachmaterial (14), dem Verstärkungsglied (13) und dem haftenden Bandmaterial (10) hindurchgeführt ist, und an dem Ende der Schnur, das sich durch die Öffnungen hindurcherstreckt, einen Teil oder eine Befestigung (17) aufweist, dessen Umfang größer ist als die Öffnungen (16) .

2. Befestigungsvorrichtung nach Anspruch 1,
bei der das Band (10) auf der das Flachmaterial (14) berührenden Oberfläche des Bandmaterials mit einem Klebemittel (11) beschichtet ist.

3. Befestigungsvorrichtung nach Anspruch 2,
bei der das Band (10) gebrauchsfertig in der Form geliefert wird, daß das Klebemittel (11) durch ein abnehmbares Blatt (12) aus ablösbarem Material geschützt ist.

4. Befestigungsvorrichtung nach einem vorhergehenden Anspruch,
bei der das Verstärkungsglied (13) einen flachen Körper aus einem relativ festen und starren Material umfaßt, der dicker ist als das Bandmaterial (10).

5. Befestigungsvorrichtung nach einem der Ansprüche 1 bis 3,
bei der das Verstärkungsglied (13) von gleicher Dicke oder dünner als das Bandmaterial (10) ist.

6. Befestigungsvorrichtung nach Anspruch 1,
bei der das Bandmaterial (10) und das Verstärkungsglied (13) in der Weise hergestellt und geliefert werden, daß sie als durchgehender Streifen aneinander haften, wobei sich das Verstärkungsglied (13) in Längsrichtung des Streifens erstreckt, wobei das Band (10) breiter ist als das Verstärkungsglied (13) und sich zu beiden Seiten desselben erstreckt, geeignet zur späteren Anbringung von Öffnungen (16) und der Schnur (15) zur Verbindung mit dem Flachmaterial (14).

7. Befestigungsvorrichtung nach Anspruch 1,
bei der der Teil (17) einen Knoten oder einen pilzförmigen Kopf umfaßt.

## Revendications

1. Moyens d'attache pour attacher un élément (15) porteur d'une charge à une tôle (14) comprenant une pièce en forme de tôle de matériau en bande (10) revêtu d'adhésif ayant une large surface et un élément de renforcement (13), l'élément de renforcement (13) étant fixé à la tôle (14) et reposant entre la tôle (14) et le matériau en bande (10) revêtu d'adhésif, le matériau en bande adhésif (10) s'étendant au-delà de l'élément de renforcement (13) sur au moins deux côtés, **caractérisés en ce que** l'élément porteur de charge (15) comprend une corde qui passe à travers des ouvertures alignées (16) pratiquées dans ladite tôle (14), l'élément de renforcement (13) et le matériau en bande adhésif (10), et possède une partie ou une attache (17) de taille plus grande que les ouvertures (16) sur l'extrémité de la corde qui s'étend à travers les ouvertures.

2. Moyens d'attache selon la revendication 1, selon lesquels la bande (10) est revêtue d'adhésif (11) sur la surface du matériau en bande au contact de la tôle (14).

3. Moyens d'attache selon la revendication 2, selon lesquels la bande (10) est fournie prête à l'usage avec l'adhésif (11) protégé par une feuille amovible (12) de matériau détachable.

4. Moyens d'attache selon l'une quelconque des revendications précédentes, selon lesquels l'élément de renforcement (13) comprend un corps plat en un matériau relativement fort et rigide, qui est plus épais que le matériau en bande (10).

5. Moyens d'attache selon l'une quelconque des revendications 1 à 3 selon lesquels l'élément de renforcement (13) est d'épaisseur égale ou plus fin que le matériau en bande (10).

6. Moyens d'attache selon la revendication 1, selon lesquels le matériau en bande (10) et l'élément de renforcement (13) sont fabriqués et fournis collés ensemble sous forme d'une bande continue ayant l'élément de renforcement (13) s'étendant longitudinalement par rapport à la bande, la bande (10) étant plus large que l'élément de renforcement (13) et s'étendant sur chacun de ses côtés pour la disposition ultérieure des ouvertures (16) et de la corde (15) pour l'assemblage avec la feuille (14).

7. Moyens d'attachement selon la revendication 1, selon lesquels ladite partie (17) comprend un noeud ou une tête bombée.
